# EUROPEAN PATENT APPLICATION

(11) **EP 2 570 928 A1**
(43) Date of publication of application: **20.03.2013**
(21) Application number: 12006489.4
(22) Date of filing: 14.09.2012
(51) Int. Cl.: G06F 12/02, G06F 12/08

(54) **Efficient non-volatile read cache for storage system**

(30) Priority: 14.09.2011 US 201161534389 P; 07.09.2012 US 201213606432
(71) Applicant: Apple Inc., Cupertino, CA 95014 (US)
(72) Inventor: Maislos, Ariel, Cupertino, CA 95014 (US); Meir, Avraham (Poza), Cupertino, CA 95014 (US)
(74) Representative: Lang, Johannes

(57) **Abstract**

A method includes, in a storage device that includes a non-volatile memory having a physical storage space, receiving data items associated with respective logical addresses assigned in a logical address space that is larger than the physical storage space. The logical addresses of the data items are translated into respective physical storage locations in the non-volatile memory. The data items are stored in the respective physical storage locations.

## Description

### CROSS-REFERENCE TO RELATED APPLICATIONS

This application claims the benefit of U.S. Provisional Patent Application 61/534,389, filed September 14, 2011, whose disclosure is incorporated herein by reference.

### FIELD OF THE INVENTION

The present invention relates generally to data storage, and particularly to methods and systems for read cache implementation for storage systems.

### BACKGROUND OF THE INVENTION

Some storage applications use non-volatile memory as a cache memory for a main storage device. For example, U.S. Patent Application Publication 2010/0057984, whose disclosure is incorporated herein by reference, describes a storage system that includes a non-volatile main memory, a non-volatile read cache, a non-volatile write cache and a data path operably coupled between the non-volatile write cache and the non-volatile read cache.

As another example, Hong and Shin describe hybrid configurations that use a Solid State Drive (SSD) as a cache memory for a Hard disk Drive (HDD), in "NAND Flash-based Disk Cache Using SLC/MLC Combined Flash Memory," 2010 International Workshop on Storage Network Architecture and Parallel I/Os, May, 2010, which is incorporated herein by reference.

### SUMMARY OF THE INVENTION

An embodiment of the present invention that is described herein provides a method including, in a storage device that includes a non-volatile memory having a physical storage space, receiving data items associated with respective logical addresses assigned in a logical address space that is larger than the physical storage space. The logical addresses of the data items are translated into respective physical storage locations in the non-volatile memory. The data items are stored in the respective physical storage locations.

In some embodiments, storing the data items includes caching the data items for a main storage that stores the data items in accordance with the respective logical addresses. In some embodiments, the method includes identifying a cached data item whose discarding from the non-volatile memory is expected to improve storage performance in the non-volatile memory by more than a predefined performance gain, and discarding the identified data item from the non-volatile memory.

Identifying the data item may include identifying a memory block of the non-volatile memory that contains less than a predefined amount of valid data, including the data item, and discarding the data item includes erasing the memory block. In another embodiment, identifying the data item includes estimating that reading the data item successfully from the non-volatile memory will incur more than a predefined latency.

In yet another embodiment, identifying the data item includes detecting more than a predefined number of errors in the data item. In still another embodiment, identifying the data item includes detecting a fault in a physical media of the non-volatile memory in a physical storage location of the data item. In an embodiment, storing the data items includes applying a redundant storage scheme that stores the data items over multiple memory devices in the storage device, and discarding the data item includes deciding not to use the redundant storage scheme for recovering the data item.

In some embodiments, the method includes, in response to a request to retrieve a data item, outputting an indication of whether the requested data item is cached in the storage device or missing from the storage device. In an embodiment, outputting the indication includes sending a read error message when the requested data item is missing from the storage device. In another embodiment, storing the data items includes caching one or more of the data items in memory blocks of the non-volatile memory whose performance level is poorer than a given performance level.

In a disclosed embodiment, receiving the data items includes receiving, for at least one of the data items, an indication requesting not to discard the data item from the non-volatile memory, and retaining the data item in the non-volatile memory responsively to the indication. In another embodiment, receiving the data items includes receiving respective priorities among the data items, and the method includes deciding which of the data items to discard from the non-volatile memory responsively to the priorities.

In some embodiments, translating the logical addresses includes performing a single direct translation of the logical addresses of the data items into the respective physical storage locations in the non-volatile memory. Performing the single direct translation may include applying to the logical addresses of the data items a hashing function that produces the respective physical storage locations.

In an embodiment, the method includes accepting in the storage device an indication of the logical address space, and configuring a translation of the logical addresses into the physical storage locations responsively to the indication. In another embodiment, the method includes reporting a level of occupancy of the non-volatile memory. In a disclosed embodiment, a translation of the logical addresses into the physical storage locations produces two or more of the physical storage locations for a given logical address, and the method includes choosing between the two or more physical storage locations in accordance with a criterion.

There is additionally provided, in accordance with an embodiment of the present invention, a storage device including a non-volatile memory having a physical storage space, and a processor. The processor is configured to receive data items associated with respective logical addresses assigned in a logical address space that is larger than the physical storage space, to translate the logical addresses of the data items into respective physical storage locations in the non-volatile memory, and to store the data items in the respective physical storage locations.

There is also provided, in accordance with an embodiment of the present invention, a storage system including a storage controller, a main storage having a logical address space, and a storage device. The storage device includes a non-volatile memory having a physical storage space that is smaller than the logical address space of the main storage, and a processor. The processor is configured to receive from the storage controller data items associated with respective logical addresses assigned in the logical address space, to translate the logical addresses of the data items into respective physical storage locations in the non-volatile memory, and to cache the data items in the respective physical storage locations.

The present invention will be more fully understood from the following detailed description of the embodiments thereof, taken together with the drawings in which:

### BRIEF DESCRIPTION OF THE DRAWINGS

Fig. 1 is a block diagram that schematically illustrates a data storage system, in accordance with an embodiment of the present invention; and
Figs. 2 and 3 are flow charts that schematically illustrate methods for operating a Flash-based read cache, in accordance with embodiments of the present invention.

### DETAILED DESCRIPTION OF EMBODIMENTS

### OVERVIEW

Embodiments of the present invention that are described herein provide improved methods and systems for data caching for storage systems. In some disclosed embodiments, a Solid State Drive (SSD) serves as a read cache for a large main storage. In a typical implementation, a storage system comprises a storage controller (or other host having storage controller functionality) that stores data in the main storage, and also communicates with the SSD for exchanging data items for caching in the SSD's non-volatile memory. In some embodiments, the storage controller uses a caching method such as write-through caching, which ensures that any element written to the cache is also written to the main storage.

The storage system stores the data items in accordance with respective logical block addresses (LBAs) that are assigned in a certain large logical address space. The SSD, on the other hand, has a physical storage space that is considerably smaller than the logical address space of the main storage. In an example embodiment, the main storage has a logical address space of several Terabytes, whereas the SSD has a physical storage space of several hundred Gigabytes. The storage controller typically manages large meta-data that maps which LB of the large main storage are mapped to the SSD LBA space. The SSD, internally, maps its LBAs to physical storage locations in the non-volatile memory.

In the disclosed embodiments, the memory management functions of the SSD are designed while exploiting the fact that the SSD is used as a read cache. This design is distinctly different from memory management in conventional SSDs in several aspects, and enables improved performance.

In some embodiments, the SSD caches data items by performing a single direct translation between the logical addresses of the data items and respective physical storage locations in the non-volatile memory. It is possible in principle to use a conventional SSD as a read cache. This sort of solution, however, would typically require two stages of translation. The first stage translates between the (large) logical address space of the main storage and the (smaller) logical address space of the SSD. The second stage translates between the logical address space of the SSD and the physical storage locations in the non-volatile memory. The disclosed single-translation scheme eliminates the two-stage address translation, and therefore simplifies storage system design, potentially improves performance and enable read-cache oriented Flash management.

In some embodiments, the SSD may decide to discard one or more of the data items cached in its non-volatile memory, if discarding these data items is expected to improve its internal performance. For example, if a certain memory block of the non-volatile memory contains only a small number of valid data items, the SSD may decide to discard them and erase the block, and thus improve storage efficiency. The SSD assumes in such case that the discarded elements are maintained in the main storage. As another example, if the SSD identifies a data item containing a large number of errors, it may discard this data item, since retrieving such a data item from the non-volatile memory is expected to be long and complex.

The SSD typically makes discarding decisions of this sort autonomously, without reporting to the host. Discarding data items in this manner is tolerable, since the SSD is operated as a read cache, meaning that each cached data item is also stored in the main storage.

The SSD may apply various rules or heuristics for deciding which data items to discard. In some embodiments, the host may influence the SSD's decisions, for example by requesting that certain data items will not be discarded or by assigning different priorities to data items.

In summary, the methods and systems described herein achieve superior caching performance by specifically designing the SSD memory management for operation as a read cache.

### SYSTEM DESCRIPTION

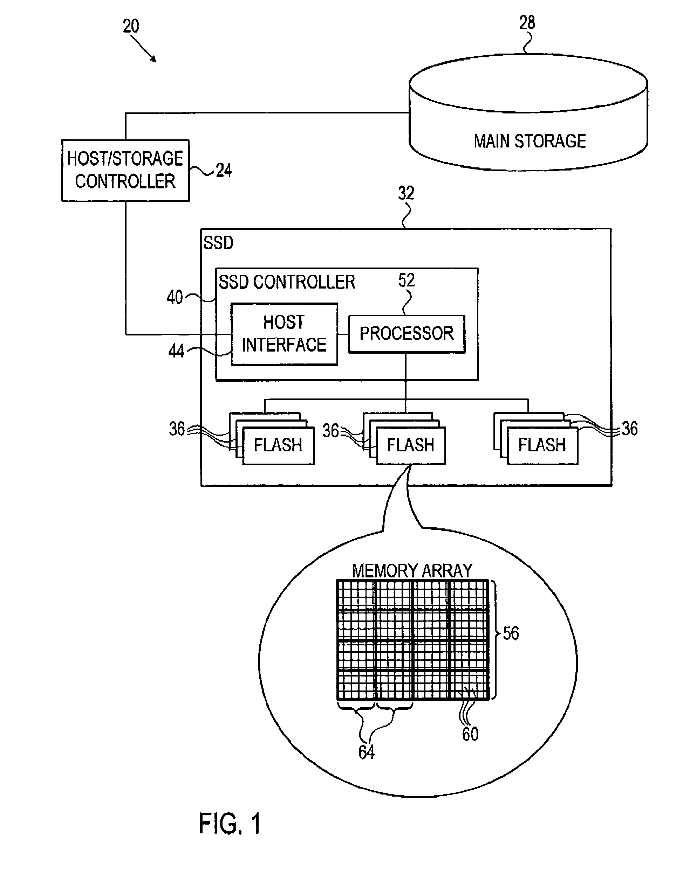

Fig. 1 is a block diagram that schematically illustrates a data storage system 20, in accordance with an embodiment of the present invention. System 20 comprises a host 24, which stores data in a large main storage 28. In addition, system 20 comprises a Solid State Drive (SSD) 32 or other non-volatile storage device that serves as a read cache for main storage 28. SSD 32 applies efficient memory management schemes that are described in detail below.

The large main storage 28 may comprise, for example, an array of Hard Disk Drives (HDDs), or any other suitable type of storage. Host 24 may comprise, for example, a storage controller or other computing platform that manages the storage of data in system 20. System 20 can be used in any suitable application or environment, such as in an enterprise storage system or data center.

SSD 32 comprises a non-volatile memory, in the present example multiple Flash memory devices 36. In alternative embodiments, the non-volatile memory in SSD 32 may comprise any other suitable memory technology. An SSD controller 40 manages the storage of data in the SSD. SSD controller comprises a host interface 44 for communicating with host 24, and a processor 52 that carries out the methods described herein. Each Flash device 36 typically comprises one or more memory arrays 56. The memory array comprises multiple Flash memory cells 60 that are arranged in memory blocks 64.

The system and SSD configurations of Fig. 1 are example configurations, which are chosen purely for the sake of conceptual clarity. In alternative embodiments, any other suitable system and/or SSD configurations can also be used.

The elements of system 20 can be implemented using digital hardware, such as in one or more Application-Specific Integrated Circuits (ASICs) or Field-Programmable Gate Arrays (FPGAs). Alternatively, some elements of system 20 (e.g., host 24 and/or processor 52 in the SSD controller) may be implemented is software, or using a combination of hardware and software elements.

In some embodiments, host 24 and/or processor 52 comprises a general-purpose processor, which is programmed in software to carry out the functions described herein. The software may be downloaded to the processor in electronic form, over a network, for example, or it may, alternatively or additionally, be provided and/or stored on non-transitory tangible media, such as magnetic, optical, or electronic memory.

In system 20, SSD 32 serves as a read cache for main storage 28. Typically, main storage 28 is large in storage space but relatively slow in data retrieval. SSD 32, on the other hand, is considerably smaller in storage space but significantly faster to retrieve data. SSD 32 typically caches a small portion of the data items that are stored in main storage 28, e.g., the most recently-used or the most frequently-used data items.

In an example flow, when intending to retrieve a certain data item, host 24 checks whether the data item is present the SSD ("cache hit"). If so, the host may retrieve the data item from the SSD with small latency. If the data item is not found in the SSD ("cache miss"), the host reverts to fetch the data item from main storage 28 with higher latency. Host 24 and/or SSD 32 may use various rules or heuristics in order to decide which data items should be cached in the SSD.

### DATA CACHING IN SSD USING A SINGLE DIRECT LOGICAL-TO-PHYSICAL ADDRESS TRANSLATION

In some embodiments, processor 52 in SSD controller 40 runs a memory management layer that is sometimes referred to as Flash management or Flash Translation Layer (FTL). In some embodiments that are described herein, the FTL and/or other functions of processor 52 are designed given the fact that SSD 32 is used as a read cache. For example, some of the disclosed techniques use the fact that any data item that is cached in SSD 32 is also stored in main storage 28.

Typically, main storage 28 stores the data items received from host 24 in accordance with respective logical addresses that are assigned in a certain large logical address space. The logical addresses are sometimes referred to as Logical Block Addresses (LBAs). In an enterprise storage application, for example, the logical address space of main storage 28 may span several tens of Terabytes. SSD 32, on the other hand, typically has a physical storage space that is considerably smaller than the logical address space of main storage 28. The physical storage space of SSD 32 is often defined as a certain percentage of the logical address space of main storage 28.

Processor 52 in SSD controller 40 typically receives data items for caching from host 24, and caches them in Flash devices 36. In some embodiments, processor 52 caches the received data items by performing a single direct translation between the logical addresses of the data items and respective physical storage locations in the non-volatile memory.

In other words, processor 52 maps the large logical address space of main storage 28 onto the considerably smaller physical address space of SSD 32. In an example embodiment, processor 52 applies a hashing function that performs the address mapping, i.e., produces a respective physical storage location as a function of each logical address in the address space of the main storage. Alternatively, any other suitable mapping process can be used.

Note that processor 52 typically performs the above-described mapping in a single direct translation, i.e., without going through any intermediate logical addresses or logical-to-logical translation. This sort of direct address translation from a large logical address space to a small physical address space is unique to the use of SSD 32 as a read cache. If, in contrast, a conventional SSD were to be used as a read cache, a two-stage address translation would typically be needed: The first stage would translate between the large logical address space of the main storage and the smaller logical address space of the conventional SSD, and the second stage would translate between the logical address space of the conventional SSD and the physical storage locations in its non-volatile memory.

As can be appreciated, such a two-stage address translation process is complex and costly in terms of computations and data structures. The single-translation scheme that is performed by SSD 32 eliminates the two-stage address translation, and therefore simplifies the SSD management, improves its performance significantly and significantly reduces the memory size needed (each translation stage consumes considerable memory, especially when the addresses of the logical blocks are random).

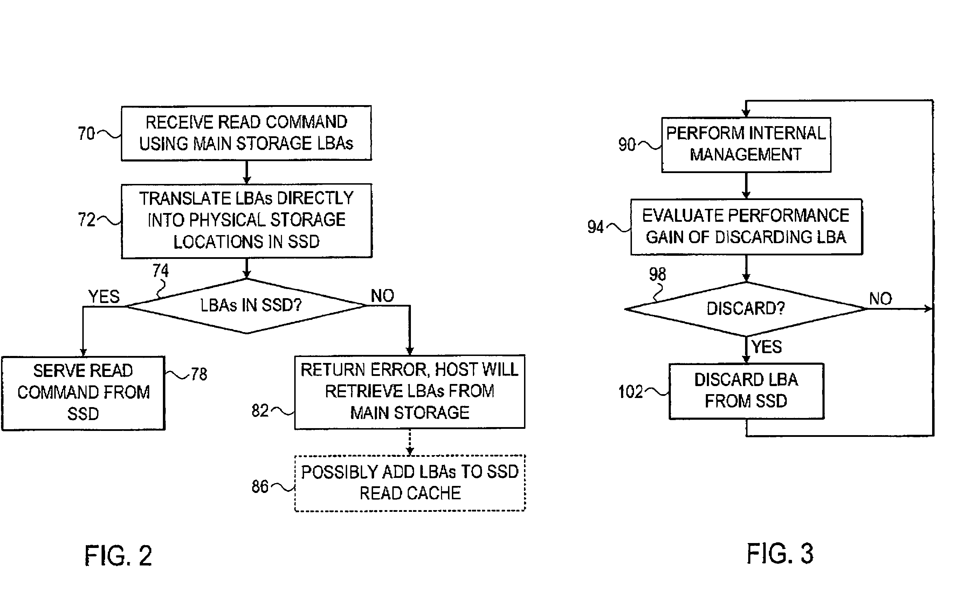

Fig. 2 is a flow chart that schematically illustrates a method for operating a Flash-based read cache, in accordance with an embodiment of the present invention. The method begins with processor 52 of SSD controller 40 receiving via interface 44 a request from host 24 to retrieve one or more data items, at a read request step 70. Each data item is identified by a respective logical address (LBA) in the logical address space of main storage 28.

Processor 52 translates the logical addresses of the requested data items into respective physical storage locations (or physical addresses) in Flash devices 36, at an address translation step 72. As explained above, processor 52 carries out step 72 by performing a single direct translation, for example using a suitable hashing table.

Processor 52 then checks whether the requested data items are present in the SSD, at a checking step 74. If the data items are found, processor 52 serves the requested data items from the SSD, at a serving step 78. Typically, processor 52 reads the requested data items from the corresponding physical storage locations in Flash devices 36, and provides the read data items via interface 44 to the host.

Otherwise, i.e., if the requested data items are not found in the SSD, processor 52 returns an error or "cache miss" indication to host 24, at an error reporting step 82. Consequently, the host will typically retrieve the requested data items from main storage 28. Optionally, after retrieving a certain requested data item from main storage 28, the host may send this data item for caching in the SSD.

The method flow shown in Fig. 2 is an example flow, which is chosen purely for the sake of clarity. In alternative embodiments, other suitable flows can also be used. For example, processor 52 may perform the address translation (step 72) only after verifying that the data items are present in the SSD (step 74), i.e., between steps 74 and 78.

In some embodiments, processor 52 of SSD controller 40 reports to host 24 whether a certain requested data item (e.g., logical block identified by a LBA) is cached in the SSD or missing. In an example embodiment, if a requested data item is missing from the SSD, processor 52 responds with a "read error" message. This technique eliminates the need to extend the storage protocol between the host and the SSD with a dedicated "cache miss" message. Alternatively, however, processor 52 may indicate to the host whether a data item is cached or missing using any other suitable technique.

In some embodiments, processor 52 can be configured with the size of the logical address space that SSD 32 is expected to cache. This configuration can be performed, for example, by host 24. In these embodiments, processor 52 defines the single logical-to-physical address translation, e.g., the hashing function described above.

In some embodiments, processor 52 reports the actual occupancy of the non-volatile memory (in the present example the occupancy of Flash devices 36). The report may be hard (e.g., a binary indication of occupied/not-occupied) or soft (e.g., the percentage of the physical storage space that is occupied by data of high priority, the percentage occupied by data of low priority, and the percentage of the physical storage space that is free. Such a report is useful, for example, for enabling a storage controller that manages multiple SSD caches to decide where to store a new data item.

### SELECTIVE DISCARDING OF DATA ITEMS IN CACHE BASED ON INTERNAL SSD MANAGEMENT CONSIDERATIONS

Since SSD 32 operates as a read cache, every data item that is cached in the SSD is also stored in main storage 28. Therefore, discarding a given data item from the SSD will not cause any data loss or inconsistency, but at most cause a slight increase in "cache miss" probability.

In some embodiments, processor 52 uses this property to improve storage performance: The processor identifies one or more data items whose presence in the non-volatile memory degrades the storage performance by more than a predefined amount, and discards the identified data items. Put in another way, processor 52 identifies one or more data items whose deletion from the non-volatile memory is expected to improve the storage performance by more than a predefined performance gain, and discards these data items from the non-volatile memory.

In various embodiments, processor 52 may apply different criteria to identify candidate data items for discarding. For example, processor 52 typically carries out a compaction process in Flash devices 36, a process that is also referred to as "garbage collection." The compaction process selects memory blocks 64 that are fragmented or contain regions of invalid data. The process copies the valid data from the selected blocks (referred to as "source blocks") into one or more alternative blocks (referred to as "destination blocks"), and then erases the source blocks.

In some embodiments, processor 52 identifies a sparsely-populated memory block, i.e., a block that contains only a small amount of valid data. The processor may, for example, look for blocks that contain less than a predefined amount of valid data. Upon identifying such a block, the processor erases the block, even though the block contains some valid data. Thus, any valid data in the erased block is discarded from the non-volatile memory.

This discarding operation helps to improve the SSD performance, because it reduces data fragmentation and clears blocks for new programming. On the other hand, only a small amount of valid data is discarded, and therefore the increase in "cache miss" probability will be small.

Additionally or alternatively, processor 52 may identify a data item whose retrieval is expected to incur more that a certain allowed latency, and discard this data item from the non-volatile memory. This technique also improves the SSD performance at the possible expense of a small increase in "cache miss" probability.

Processor 52 may apply various criteria to estimate the expected latency of reading a given data item. For example, if a given data item contains a large number cf errors, reading it from the Flash devices may incur considerable error correction and/or interference cancellation resources, and thus high latency. Therefore, processor 52 may decide to discard data items that contain more than a certain predefined number of errors.

As another example, if the physical media (e.g., one or more memory cells 60) used for storing a given data item is defective, reading this data item from the Flash devices may incur considerable error correction and/or interference cancellation resources, and thus high latency. Therefore, processor 52 may decide to discard data items that are stored in physical media known to have a defect.

As yet another example, processor 52 may store data items using a redundant storage scheme among multiple Flash devices 36, such as a Redundant Array of Inexpensive Disks (RAID) scheme. In some cases, if a given data item contains errors, processor 52 may decide to discard it instead of reconstructing it using the RAID scheme. Further alternatively, processor 52 may decide which data items to discard based on any other suitable criterion.

In some embodiments, host 24 indicates to SSD 32 its preferences regarding discarding of certain data items. Processor 52 takes the host preferences in making its discarding decisions. For example, the host may request the SSD not to discard a certain data item until the next time it is read. As another example, the host may provide the SSD with respective priorities assigned to the cached data items. In an example embodiment, low-priority data items should be selected first as candidates for discarding, and high-priority data items should be selected last. Processor 52 may consider these priorities, possibly together with other factors such as the criteria described above, in selecting data items for discarding.

Fig. 3 is a flow chart that schematically illustrates a method for operating a Flash-based read cache, in accordance with an embodiment of the present invention. The method begins with processor 52 of SSD controller 40 performing internal memory management, at a management step 90. For a given data item that is cached in Flash devices 36, processor 52 evaluates the expected performance gain that will be achieved if the data item is discarded from the non-volatile memory, at a discarding evaluation step 94.

If the expected performance gain is not large enough (e.g., below some predefined threshold), as checked at a checking step 98, the method loops back to step 90 above. If the expected performance gain is above the threshold, processor 52 discards the data item, at a discarding step 102, and then the method loops back to step 90.

Although the embodiments described herein mainly address SSDs, the methods and systems described herein can also be used for implementing read cache using any other suitable type of non-volatile storage devices. Although the embodiments described herein refer mainly to Flash memory, the disclosed techniques can be used, mutatis mutandis, with any other suitable memory technology.

In the embodiments described herein, the logical-to-physical address translation in the SSD provides a single physical storage location per logical address. In alternative embodiments, however, the logical-to-physical address translation may produce multiple physical storage locations for a given logical address. When preparing to cache or retrieve a data item whose LBA corresponds to two or more physical storage locations, processor 52 may decide on the actual physical storage location based on any suitable criterion.

In some embodiments, processor 52 of SSD controller 32 may use blocks 64 whose performance is below a certain level for caching data items, even though this level of performance would normally prevent storing data in such blocks. For example, processor 52 may cache data items is blocks that are declared as bad (e.g., blocks that failed to erase), in retired blocks (blocks that have exceeded a certain maximum number of programming and erasure cycles), or blocks that have poor retention characteristics. Blocks of this sort, or at least parts of such blocks, are often capable of caching data items for some limited time. This technique increases the cache capacity.

It will thus be appreciated that the embodiments described above are cited by way of example, and that the present invention is not limited to what has been particularly shown and described hereinabove. Rather, the scope of the present invention includes both combinations and sub-combinations of the various features described hereinabove, as well as variations and modifications thereof which would occur to persons skilled in the art upon reading the foregoing description and which are not disclosed in the prior art. Documents incorporated by reference in the present patent application are to be considered an integral part of the application except that to the extent any terms are defined in these incorporated documents in a manner that conflicts with the definitions made explicitly or implicitly in the present specification, only the definitions in the present specification should be considered.

## Claims

1. A method, comprising:
in a storage device, which comprises a non-volatile memory having a physical storage space, receiving data items associated with respective logical addresses assigned in a logical address space that is larger than the physical storage space;
translating the logical addresses of the data items into respective physical storage locations in the non-volatile memory; and
storing the data items in the respective physical storage locations.

2. The method according to claim 1, wherein storing the data items comprises caching the data items for a main storage that stores the data items in accordance with the respective logical addresses.

3. The method according to claim 2, and comprising identifying a cached data item whose discarding from the non-volatile memory is expected to improve storage performance in the non-volatile memory by more than a predefined performance gain, and discarding the identified data item from the non-volatile memory.

4. The method according to claim 3, wherein identifying the data item comprises identifying a memory block of the non-volatile memory that contains less than a predefined amount of valid data, including the data item, and wherein discarding the data item comprises erasing the memory block.

5. The method according to claim 3, wherein identifying the data item comprises estimating that reading the data item successfully from the non-volatile memory will incur more than a predefined latency.

6. The method according to claim 3, wherein identifying the data item comprises detecting more than a predefined number of errors in the data item.

7. The method according to claim 3, wherein identifying the data item comprises detecting a fault in a physical media of the non-volatile memory in a physical storage location of the data item.

8. The method according to claim 1, wherein storing the data items comprises applying a redundant storage scheme that stores the data items over multiple memory devices in the storage device, and wherein discarding the data item comprises deciding not to use the redundant storage scheme for recovering the data item.

9. The method according to claim 2, and comprising, in response to a request to retrieve a data item, outputting an indication of whether the requested data item is cached in the storage device or missing from the storage device.

10. The method according to claim 9, wherein outputting the indication comprises sending a read error message when the requested data item is missing from the storage device.

11. The method according to claim 2, wherein storing the data items comprises caching one or more of the data items in memory blocks of the non-volatile memory whose performance level is poorer than a given performance level.

12. The method according to claim 1, wherein receiving the data items comprises receiving, for at least one of the data items, an indication requesting not to discard the data item from the non-volatile memory, and retaining the data item in the non-volatile memory responsively to the indication.

13. The method according to claim 1, wherein receiving the data items comprises receiving respective priorities among the data items, and comprising deciding which of the data items to discard from the non-volatile memory responsively to the priorities.

14. The method according to claim 1, wherein translating the logical addresses comprises performing a single direct translation of the logical addresses of the data items into the respective physical storage locations in the non-volatile memory.

15. The method according to claim 14, wherein performing the single direct translation comprises applying to the logical addresses of the data items a hashing function that produces the respective physical storage locations.

16. The method according to claim 1, and comprising accepting in the storage device an indication of the logical address space, and configuring a translation of the logical addresses into the physical storage locations responsively to the indication.

17. The method according to claim 1, and comprising reporting a level of occupancy of the non-volatile memory.

18. The method according to claim 1, wherein a translation of the logical addresses into the physical storage locations produces two or more of the physical storage locations for a given logical address, and comprising choosing between the two or more physical storage locations in accordance with a criterion.

19. A storage device, comprising:
a non-volatile memory having a physical storage space; and
a processor, which is configured to receive data items associated with respective logical addresses assigned in a logical address space that is larger than the physical storage space, to translate the logical addresses of the data items into respective physical storage locations in the non-volatile memory, and to store the data items in the respective physical storage locations.

20. The storage device according to claim 19, wherein the processor is configured to cache the data items for a main storage that stores the data items in accordance with the respective logical addresses.

21. The storage device according to claim 19, wherein the processor is configured to identify a cached data item whose discarding from the non-volatile memory is expected to improve storage performance in the non-volatile memory by more than a predefined performance gain, and to discard the identified data item from the non-volatile memory.

22. The storage device according to claim 21, wherein the processor is configured to identify a memory block of the non-volatile memory that contains less than a predefined amount of valid data, including the data item, and to discard the data item by erasing the memory block.

23. The storage device according to claim 21, wherein the processor is configured to identify the data item by estimating that reading the data item successfully from the non-volatile memory will incur more than a predefined latency.

24. The storage device according to claim 21, wherein the processor is configured to identify the data item by detecting more than a predefined number of errors in the data item.

25. The storage device according to claim 21, wherein the processor is configured to identify the data item by detecting a fault in a physical media of the non-volatile memory in a physical storage location of the data item.

26. The storage device according to claim 21, wherein the processor is configured to store the data items using a redundant storage scheme that stores the data items over multiple memory devices of the non-volatile memory, and to discard the data item by deciding not to use the redundant storage scheme for recovering the data item.

27. The storage device according to claim 20, wherein, in response to a request to retrieve a data item, the processor is configured to output an indication of whether the requested data item is cached in the storage device or missing from the storage device.

28. The storage device according to claim 27, wherein the processor is configured to output the indication by sending a read error message when the requested data item is missing from the storage device.

29. The storage device according to claim 20, wherein the processor is configured to cache one or more of the data items in memory blocks of the non-volatile memory whose performance level is poorer than a given performance level.

30. The storage device according to claim 19, wherein the processor is configured to receive, for at least one of the data items, an indication requesting not to discard the data item from the non-volatile memory, and to retain the data item in the non-volatile memory responsively to the indication.

31. The storage device according to claim 19, wherein the processor is configured to receive respective priorities among the data items, and to decide which of the data items to discard from the non-volatile memory responsively to the priorities.

32. The storage device according to claim 19, wherein the processor is configured to translate the logical addresses by performing a single direct translation of the logical addresses of the data items into the respective physical storage locations in the non-volatile memory.

33. The storage device according to claim 32, wherein the processor is configured to performing the single direct translation by applying to the logical addresses of the data items a hashing function that produces the respective physical storage locations.

34. The storage device according to claim 19, wherein the processor is configured to accept an indication of the logical address space, and to configure a translation of the logical addresses into the physical storage locations responsively to the indication.

35. The storage device according to claim 19, wherein the processor is configured to report a level of occupancy of the non-volatile memory.

36. The storage device according to claim 19, wherein a translation of the logical addresses into the physical storage locations produces two or more of the physical storage locations for a given logical address, and wherein the processor is configured to choose between the two or more physical storage locations in accordance with a criterion.

37. A storage system, comprising:
a storage controller;
a main storage having a logical address space; and
a storage device, comprising:
a non-volatile memory having a physical storage space that is smaller than the logical address space of the main storage; and
a processor, which is configured to receive from the storage controller data items associated with respective logical addresses assigned in the logical address space, to translate the logical addresses of the data items into respective physical storage locations in the non-volatile memory, and to cache the data items in the respective physical storage locations.
